# EUROPEAN PATENT APPLICATION

(11) **EP 1 566 659 A1**
(43) Date of publication of application: **24.08.2005**
(21) Application number: 05002179.9
(22) Date of filing: 02.02.2005
(51) Int. Cl.: G01S 17/42, G01S 7/48

(54) **Method and device for determining the center position and extension of an object in a lidar image**

(30) Priority: 18.02.2004 JP 2004041515
(71) Applicant: OMRON CORPORATION, Kyoto 600-8530 (JP)
(72) Inventor: Matsuura, Yoshio, Omron Corp. 801 Minamifudodo-cho, Kyoto-shi Kyoto 600-8530 (JP)
(74) Representative: Kilian, Helmut

(57) **Abstract**

A radar device transmits electromagnetic waves while scanning a detection area in a scan direction and detects an object in each of detection regions into which the detection area is partitioned in the scan direction. The radar device sets a continuous waveform of signal intensity of scan positions from data on the signal intensity of reflected waves individually from the detection regions and extracts a peak from the continuous waveform. A threshold value is set based on signal intensity at the extracted peak, and the scan positions are determined on both sides of the peak at which the signal intensity is equal to the threshold value as positions of both ends of the object in the scan direction.

## Description

Priority is claimed on Japanese Patent Application 2004-041515 filed February 18,2004.

### Background of the Invention

This invention relates to a radar device which may be set on a vehicle for using electromagnetic waves such as laser light or millimeter waves to detect presence or absence of a front-going vehicle or to obtain its position data.

Radars (radar devices for vehicles) for monitoring obstacles in front of a vehicle or for a cruise control are widely being developed, and those of the so-called electromagnetic waves and laser types have been known for transmitting electromagnetic waves such as laser light in pulse form to an object (such as a reflector on another vehicle) and measuring the distance to it from the delay time until the reflected waves are received or scanning an area with electromagnetic waves to detect the direction of the object. As for the method of scanning, there are methods of scanning by moving only the transmitter and methods by moving both the transmitter and the receiver.

As described in Japanese Patent Publications Koho 3,376,864 and 2,576,638, Tokkai 2003-149338 and 2002-157697 and Jikkai 4-158293, 3-30117 and 7-225276, prior art radar devices for vehicles of these types are adapted to partition a detection area extending in the direction of the scan (either the same as the area that can be scanned or a specified area smaller than the maximum range of the scanning) and to carry out a measurement (that is, a signal analysis process on the reflected waves) individually for each of a plurality of detection regions. For example, a detection area with an angular extension of 20° is partitioned into ten regions each having a scan angle of 2° and a measurement operation is carried out for each of the ten detection regions.

Transmission and reception of electromagnetic waves (such as the emission and reception of laser light) are repeated, for example, at a specified frequency (such as once per 0.02°) at least for a specified number of times inside each of the detection region while scanning a specified scan area (which may be equal to or wider than the detection area). The signal analysis process on the reflected waves (for detecting reception intensity and determining the distance from the delay time until the reception) is carried out for each detection region, say, by preliminarily integrating and averaging the data for each detection region, in order to reduce the burden of processing.

In the aforementioned prior art signal analysis process, an object is recognized as an assembly (an integrated group) of detection regions having its presence (for example, those regions where the reflected wave has a value above a detection threshold), and its width in the direction of the scan (or its end positions) and its center position in the direction of the scan are obtained as the size and the center position of such an assembly in the direction of the scan. In the case of a two-dimensional scan method where a scan is carried out in two directions (such as the horizontal and vertical directions), the detection regions are formed in a matrix formation and an assembly of these detection regions has a two-dimensional size and a two-dimensional shape. From such an assembly, a two-dimensional position and a two-dimensional size of the object, as well as its shapes projected on planes parallel to these two directions can be obtained.

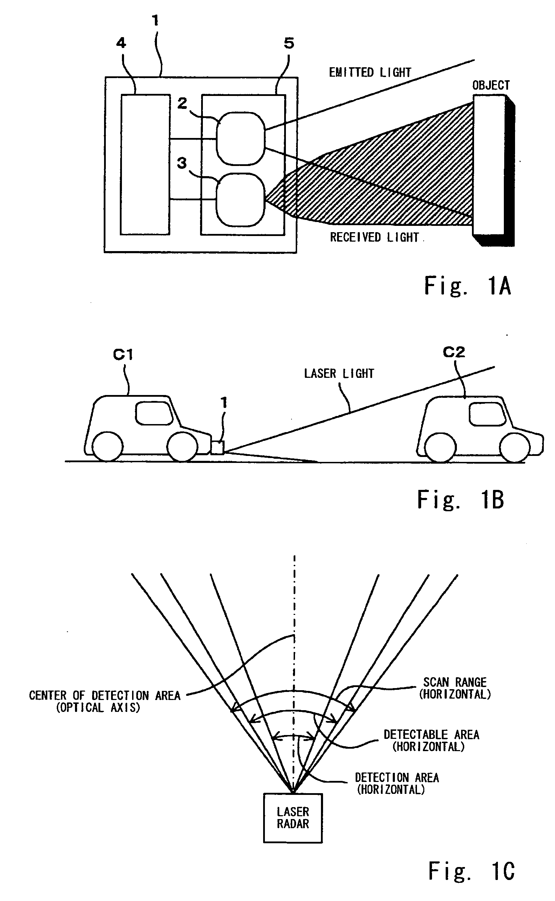

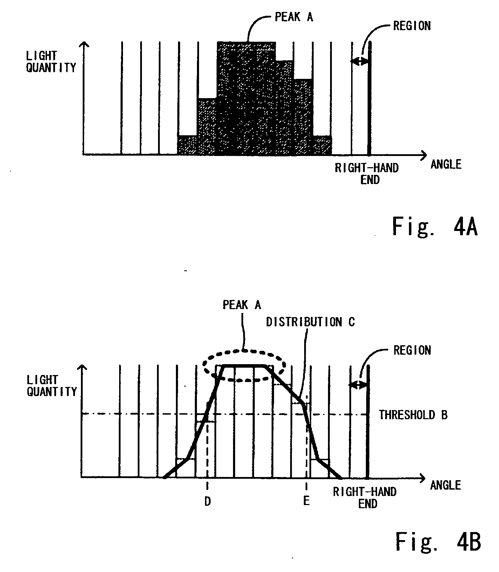

Although aforementioned Japanese Patent Publication Jikkai 4-158293 refers to a calculation of the width of a reflective object from the variations in the intensity of received light, its Figs. 1 and 4 as well as statements related thereto make it clear that the width of an object is therein estimated only based on both end positions in the direction of the scan of an assembly of detection regions where the intensity of reflected light exceeds a detection threshold. In other words, there is no disclosure of filling the gaps between data on detection regions as discontinuous points.

The prior art technologies as described above have the following problems.
(1) The measurement accuracy for the center position of an object in the direction of the scan depends upon the resolution of the detection regions that are set, and hence the center position cannot be detected with any better accuracy;
(2) The measurement accuracy in the size (such as width, height and shape) of an object depends also upon the resolution of the detection regions that are set, and hence the detection cannot be made with any better accuracy;
(3) Two objects near each other are detected as a single object due to the spread of electromagnetic waves, etc. and cannot be detected separately; and
(4) Objects outside both ends of the detection area are erroneously recognized as being inside the detection area due to the spread of electromagnetic waves, etc.

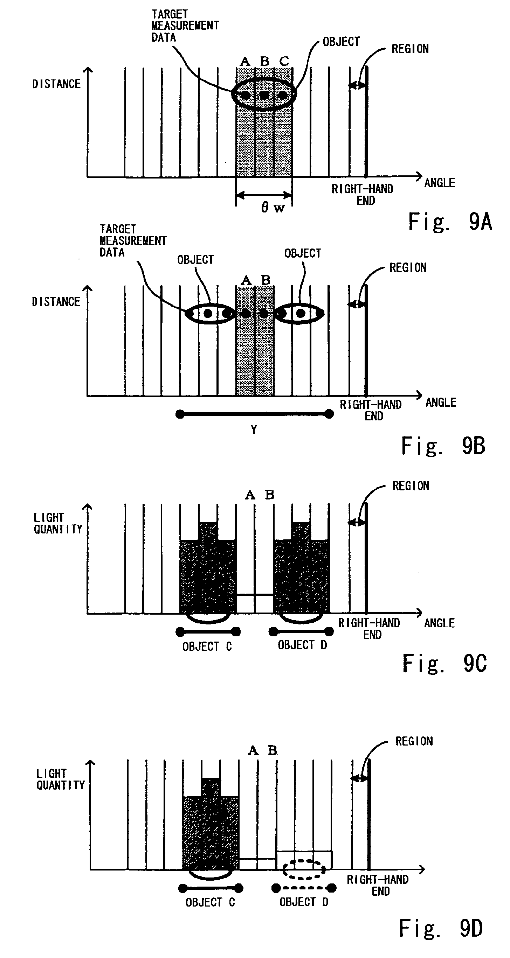

Fig. 9A is for explaining the first two problems (1) and (2) described above. In what follows, the aforementioned detection region is sometimes simply referred to and written as "region". Since a scan mechanism of an oscillating type is assumed and hence the amount of scan is expressed in units of angle, the amount of scan may be expressed in units of distance by converting from a polar coordinate system to a rectangular coordinate system.

Fig. 9A shows a situation where the intensity of reflected light exceeds a threshold value in three consecutive regions A, B and C. If this allows these three regions A, B and C to be grouped together, this assembly of the regions A, B and C is interpreted as representing an object. The width of this object in the direction of the scan is calculated from the range of their positions in the direction of the scan (angular range Θ_{w} in this case) and the outside edge positions of the side regions A and C are taken as indicating the end positions of this object. The center of this assembly as a whole (the center of region B) is taken as the center position of the object. An object as shown by Fig. 9A, however, is observed as the same data even if its actual end positions are somewhat displaced from the outer positions of regions A and C by a distance less than the width of a region or if the actual center position is somewhat displaced from the center position of region B. Thus, the position data of the object thus interpreted contain an error corresponding to the size of the region, and the position and the size of an object in the direction of the scan cannot be detected with an accuracy better than that determined by the resolution of the detection regions determined by their size.

Fig. 9B is for explaining the third problem (3) described above. Since electromagnetic waves spread radially, if two objects are close to each other, the intensity of received waves may be above the detection threshold in the regions A and B between the two objects where actually there is no object, causing it to be concluded that there is an object in these regions. In other words, the two objects that are actually separate from each other may be regarded as one large object as indicated by arrow Y.

The fourth problem (4) described above is also caused because electromagnetic waves spread radially. As an object approaches the detection area from outside, the intensity of the reflected waves from this object may become above the detection threshold in the regions near an end of the detection area, causing an erroneous conclusion that the object is inside the detection area.

It may be tempted to make the detection regions smaller in order to eliminate the first and second problems (1) and (2), but this is not a practical solution because it will increase the cost of the apparatus and also the operational cost. In the case of a laser radar, furthermore, it will become more difficult to satisfy the safety requirement against injury to the eyes.

As for the third problem (3), there is the method of eliminating those of the regions judged to have an object therein but having a relatively low amount of received light. In a situation where there are two objects C and D which are similar in reflectivity as shown in Fig. 9C, regions A and B where objects are absent are eliminated because the amount of received light is relatively low in these two regions. Thus, it is prevented from erroneously regarding the two objects C and D to be one single object. If one of the objects C is much higher in reflectivity than the other object D, as shown in Fig. 9D, however, not only regions A and B where there is no object but also regions where object D does exist are likely to be also eliminated and only object C will be recognized as being present.

### Summary of the Invention

It is therefore an object of this invention to provide a radar device capable of detecting the size and position of an object in the scan direction with accuracy better than the resolution of the detection regions such that incorrect detection as explained above can be avoided.

A radar device according to a first embodiment of this invention may be characterized as being for transmitting electromagnetic waves while scanning a detection area in a scan direction therewith and detecting an object in each of detection regions into which the detection area is partitioned in the scan direction and comprising what are herein referred to as waveform setting means, peak extracting means, threshold setting means and end position judging means. In the above, the waveform setting means is for setting a continuous waveform of signal intensity of scan positions from data on the signal intensity of reflected waves individually from the detection regions, the peak extracting means is for extracting a peak from the continuous waveform set by the waveform setting means, the threshold setting means is for setting a threshold value based on signal intensity at the peak extracted by the peak extracting means, and the end position judging means is for judging the scan positions on both sides of the peak at which the signal intensity is equal to the threshold value set by the threshold setting means as end positions of the object in the scan direction.

In the above, the detection area means the area in the direction of the scan (scan direction) into which and from which electromagnetic waves are transmitted and received and wherein detection of objects takes place. This may be the same as or smaller than the scan range within which the scanning by the device is possible.

The detection ranges are divided areas into which the detection area is partitioned in the direction of the scan. As explained above, detection takes place in units of these detection ranges.

In the case of a laser radar installed on a vehicle, however, the scan range of the laser light is usually set to be larger than the detection area, or the angular range from which reflected waves are received, as shown in Fig. 1C, and the position of the detection area in the scan direction is made adjustable to a certain extent by changing software parameters (the set position of the detection area for data processing within the scan range) without physically modifying the set angle of the detection head of the radar. The present invention is applicable to such a radar device and also to a device with the detection area and the scan range matching. If the detection area is smaller than the scan range, electromagnetic waves such as laser light may be adapted to be transmitted into and received from only the detection area such that waste power consumption can be reduced.

The radar device according to a preferable embodiment may further comprise center position judging means for judging a center position of the object in the scan direction based on the end positions judged by the end position judging means.

The continuous waveform set by the waveform setting means may be formed by using straight line segments to connect the points representing the data on received signal intensity (data points) but it is preferable to interpolate these data points, say, by means of a polynomial function. Extraction of a peak may be carried out every time over all regions but it is wasteful to carry out this process where it is clear that there is no object. Thus, it is preferable to group together those of the detection regions found to have an object (targets) as a preliminary process and to carry out the setting of a continuous waveform and extraction of a peak only for such an assembly of targets that have been grouped.

After a continuous waveform is thus set, the radar device according to the first embodiment determines the end positions of the object in the scan direction on both sides of an extracted peak. Thus, these end positions can be determined with an accuracy better than the resolution of the detection regions. This is because, if there is an object with uniform reflectivity, there is a peak approximately at the center of the positions of the object and the actual end positions are on both sides of the peak and at positions where the intensity of the received light has a specified relationship (such as a specified percentage) with that at the peak with accuracy better than the aforementioned resolution according to the research by the inventor. For this reason, a threshold value is set based on the intensity of received signal at the peak and the scan positions on both sides of the peak where the intensity of the received light matches this threshold value are judged as corresponding to the actual end positions of the object.

In the case where the radar device is further provided with center position judging means, the center position of the object in the scan direction can also be determined with accuracy better than the resolution of the detection regions. The center position can also be obtained easily and accurately by taking the average of the end positions determined by the end position judging means.

Since an object is identified for each peak of the continuous waveform, the radar device of this invention can accurately recognize two objects as two separate objects inclusive of situations where the intensity of received light from one of them is relatively low. If an object is near but outside the detection area, furthermore, it is not recognized as being inside the detection area because such an object does not generate a peak.

A radar device according to another embodiment of the invention is also characterized as being for transmitting electromagnetic waves while scanning a detection area in a scan direction therewith and detecting an object in each of detection regions into which the detection area is partitioned in the scan direction and comprises waveform setting means and peak extracting means as explained above and center position judging means for judging a center position of the object in the scan direction based on the top position of a peak extracted by the peak extracting means. The center position may be judged as the top position of the peak itself. Alternatively, a position identified by multiplying or adding a specified adjustment number to the value of the peak position may be judged to be the center position in the scan direction.

By this device, too, the center position of the object can be determined with accuracy better than the resolution of the detection ranges for the same reason explained above and the same merits as explained above can be equally enjoyed.

### Brief Description of the Drawings

Figs. 1A, 1B and 1C, together referred to as Fig. 1, are drawings for showing the structure, setup and operation of a radar device.
Fig. 2 is a flowchart of a control process of the radar device for recognizing an object position.
Fig. 3 is a flowchart of a control process of the radar device for extracting an object.
Figs. 4A and 4B are graphs used for determining the position of an object by the radar device.
Figs. 5A, 5B and 5C are drawings for demonstrating an effect of the radar device according to this invention.
Figs. 6A, 6B, 6C and 6D are drawings for demonstrating another effect of the radar device according to this invention.
Fig. 7 is a flowchart of a control process by another radar device according to a second embodiment of the invention.
Figs. 8A and 8B are drawings for demonstrating determination of the position of an object by the radar device of the second embodiment of the invention.
Figs. 9A, 9B, 9C and 9D are diagrams for showing problems with prior art radar devices.

### Detailed Description of the Invention

The invention is described next by way of embodiments.

Figs. 1A, 1B and 1C, together referred to as Fig. 1, are for explaining a radar device 1 for a vehicle according to a first embodiment of the invention, Fig. 1A showing the structure of the device, Fig. 1B showing the device as set on a vehicle and Fig. 1C showing the relationship between its detection area and its scan range.

The radar device 1 shown in Fig. 1 is a laser radar device of a pulse echo type and comprises a light emitter 2, a light receiver 3, a calculator part 4 and a scan mechanism 5. The calculator part 4 in this example serves as aforementioned waveform setting means, peak extracting means, threshold setting means, end position judging means and center position judging means.

The light emitter 2 includes a radar transmitter head having a laser diode LD and its optical system and a driver circuit for the laser diode. The light receiver 3 includes a radar receiver head having a photodiode PD and its optical system and a light receiving circuit for processing the output from the photodiode.

The driver circuit is controlled by the calculator part 4 and causes laser light (laser pulse) to be outputted by operating on the laser diode at the light emission timing generated by the calculator part 4. This light emission timing is preliminarily set such that light emission and reception will take place for a specified number of times in the detection regions formed by partitioning the detection area into specified widths in the direction of scan. The period of laser light emission may be constant.

The scan mechanism 5 is also controlled by the calculator part 4 and operates at a specified timing and at a specified frequency to transmit the laser light outputted from the laser diode by using an oscillatory reflecting mirrors to scan at least within a specified angle in the left-right direction (the scan range). The scan angle is set to be wider than the detection area for carrying out detection of objects, as shown in Fig. 1C. Adjustments of the optical axis can be effected by changing software parameters. Although only the one-dimensional scan method with scan carried out only in the horizontal (left-right) direction is explained in what follows, the scan may be in two directions including both the horizontal and vertical directions. The scan speed may be constant. The scan mechanism may include a scan position detection sensor for detecting the scan direction and inputting its signal (the scan direction signal) to the calculator part 4.

The photodiode is for receiving reflected light which is the transmitted laser light reflected by an object and coming backward and is adapted to output an electrical signal (hereinafter referred to as the received light quantity signal) corresponding to the quantity (intensity) of received light. The received light quantity signal outputted from the photodiode is inputted to the aforementioned light receiving circuit and is processed by the light receiving circuit and the calculator part 4. In other words, the received light quantity signal is read in at a sampling frequency corresponding to the aforementioned timing for the light emission, say, for a specified length of time after the light emission, and data on the received light quantity having the delay time (distance) as the horizontal axis (hereinafter referred to as the received light waveform data) are created. When the transmission and reception of laser light take place for a plural number of times in the detection region (or when there are a plural number of waveform data items for each detection region), these waveform data are integrated for each detection region and stored, for example, in a memory inside the calculator part 4 as data on received signal for each detection region. The value of the distance calculated on the basis of the delay time of the peak position of these received light waveform data is stored as the data item of distance to the object for each detection region.

Since the number of times laser light is transmitted and received in each detection region (or the frequency of laser light emission) is a factor that determines the basic detection sensitivity (or the sensitivity at a standard region), it is determined on the basis of conditions such as power of emitted light, the spread of the projected beam and the reflectivity of the target object of detection such that the target object can be dependably detected under a favorable circumstance without causing any erroneous detection.

The radar device 1 is set on the user's own vehicle C1 as shown in Fig. 1B, for example, for projecting laser light forward into a detection area to detect a light reflector such as a front-going vehicle C2 as an object of detection. The detection area according to this invention need not extend in front but may be set in a backward direction for detecting objects such as a trailing vehicle.

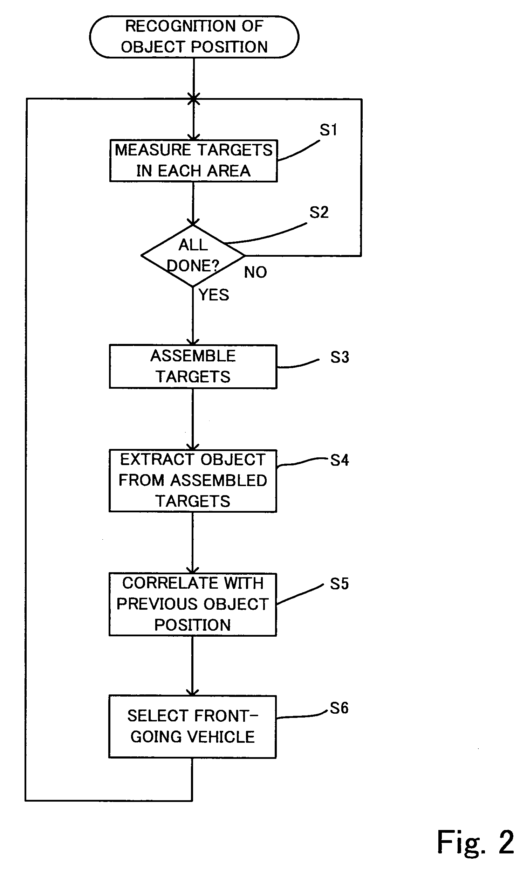

The calculator part 4 is a circuit containing a microcomputer including a CPU, a ROM and a RAM and serves to recognize an object by carrying out a process, say, shown by the flowchart of Fig. 2 in a convenient manner (such as by carrying it out periodically while the vehicle is running).

The process according to the flowchart of Fig. 2 starts by carrying out the measurement operations explained above (by transmitting and receiving laser light and generating and storing data such as the received light quantity) for each of the detection regions (Step S1). After it is ascertained that these measurement operations have been completed for all of the detection regions (YES in Step S2), the loop with Steps S3-S6 is repeated.

Those of the detection regions where presence of an object has been determined are hereinafter sometimes referred to as "targets". Identification of a detection region as a target may be made, for example, if the received light quantity data exceed a preset detection threshold value.

Next, those of the targets that are mutually close are made into a group and regarded as a target assembly (Step S3). Grouping of targets may be carried out, for example, by correlating mutually close (or adjacent) targets in a two-dimensional coordinate system (in the left-right direction which is the scan direction and the forward-backward direction of the vehicle) or a three-dimensional coordinate system (in the left-right direction, the forward-backward direction and the upward-downward direction). Many grouping methods are known and hence no detailed accounts will be presented here.

Next, individual objects are extracted (classified) from the target assembly grouped out in Step S3 and their center positions and sizes are calculated (Step S4). Details of this step will be explained separately below. For the sake of efficiency, the routine should be prepared such that this step will be skipped if there is no target assembly. It is also preferable that this step be carried out not over all of the detection areas but only over the areas of the target assembly.

Next, comparisons are made between the data on the object extracted in the previous sequence and that extracted in the present sequence (Step S5) in order to correlate them as relating to the same object. For example, a range may be determined with a standard spread around the previous position of an object and if the object exists currently within this range, it may be judged that they relate to the same object.

Next, for the purpose of cruise control, for example, data corresponding to a monitored object such as a front-going vehicle are selected out of the recognized data of objects (Step S6). For this step, many factors may be taken into consideration. For example, it may be checked whether the size of the object in the direction of the scan (which may be the width in the case of a one-dimensional scan and may be the width, height or shape in the case of a two-dimensional scan) is that of a vehicle. White lines may be detected from an image taken by a camera and the lane in which one's own vehicle is traveling may be identified on the basis of the road shape estimated by a yaw rate sensor, a steering angle sensor, a wheel speed sensor, etc. It may also be checked whether the object existed recently within such a region with respect to one's own vehicle and whether it is an stationary object or not from its estimated speed with respect to that of one's own vehicle (obtained from the difference in the current position and the previous position of the object in the forward-backward direction). By considering these factors, it may be judged that the observed object is indeed a vehicle. Such data on a front-going vehicle are transmitted to a host system, say, for a cruise control purpose.

After Step S6, the program returns to Step S1 at a predetermined timing and the subsequent steps are repeated.

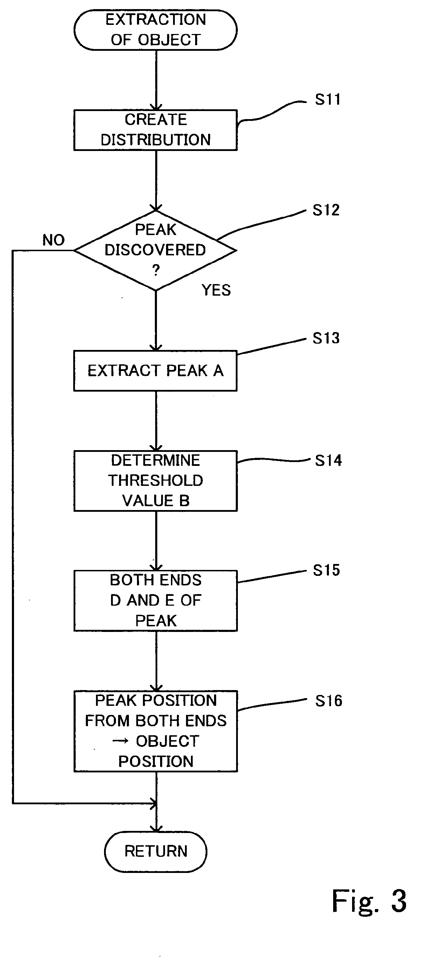

Aforementioned Step S4 for extracting an object is explained next more in detail with reference to the flowchart of Fig. 3.

As this process is started, the received light quantity (received light intensity) data of each detection region (or preferably only of those regions forming the target assembly) obtained in Step S1 above are investigated and a distribution of received light quantity for each detection region is prepared (Step S11). The distribution may be a graph as shown in Fig. 4A.

Next, it is determined if the distribution prepared in Step S11 has a peak (Step S12). If there is a peak (YES in Step S12), Steps S13-S16 are sequentially carried out. If no peak is found (NO in Step S12), the routine returns to the beginning. This judgment on the presence or absence of a peak may be carried out by calculating the difference in the received light quantity from one detection region to the next one and determining whether there is a region where the difference changes from a plus to a minus as the scan position is changed. This is a simple method without creating a continuous waveform but a peak extraction method by creating a continuous waveform as will be discussed below may be used. If the aforementioned simple method is used to initially determine the presence or absence of a peak and if it is determined that there is no peak, the peak extraction process can be dispensed with and it can be avoided to carry out the relatively complicated process (Step S13 to be described below) uselessly. The load on the CPU for processing can thus be reduced.

In Step S13, a continuous distribution of the received light quantity (a continuous waveform of received light quantity with respect to the scan position) is prepared and the received light quantity at the peak (the peak value) is extracted. In the case of a distribution as shown in Fig. 4A, the center point on the graph for each detection region (hereinafter referred to as the data point) may be connected by straight line segments as shown in Fig. 4B to obtain a continuous waveform (estimated distribution C).

Extraction of a peak may be effected, for example, by finding three data points P0, P1 and P2 satisfying conditions P0<P1 and P1≥P2 and identifying the received light quantity at data point P1 to be the peak quantity. In the example of Figs. 4A and 4B, the position shown by peak A is a maximum and hence the received light quantity at this point is stored as the peak received light quantity data.

Step S13 may be dispensed with if extraction of peak received light quantity data is effected in Step S 12 in addition to the judgment of the presence of a peak.

For further improving the reliability in the detection and recognition of an object, any additional condition for the identification may be imposed.

Next, threshold values for determining the both end positions are set on the basis of the received light quantity data of the peak extracted in Step S13 (Step S 14). In the case of Figs. 4A and 4B, for example, threshold value B is obtained by a predetermined function from the received light quantity at peak A. This function may be determined experimentally, corresponding to the specifications of the laser light. According to the research by the present inventor, however, a simple multiplication by a factor smaller than 1 may be acceptable. If this multiplicative factor is 0.5, the threshold value B becomes 50% of the peak received light quantity.

Next, the scan positions on both sides of the peak of the continuous waveform where the received light quantity has the same value as the threshold value determined in Step S14 are defined as corresponding to the end positions of the object in the direction of scan (Step S 15). In the example of Fig. 4B, the curve representing the estimated distribution C takes the threshold value B at positions D on the left-hand side and E on the right-hand side of the peak A. These positions D and E are taken as indicative of the left-hand and right-hand end positions of the detected object.

A problem arises as to the distance data (position data in the forward-backward direction) regarding the end positions of the object thus determined. They may be considered the same as the distance data of the adjacent data points (preferably on the inner side of the end points).

Next, the center position of the object in the direction of scan is determined based on the end positions determined in Step S 15 (Step S16). This is done by taking the average of the position data for these two end positions (positions D and E in the example of Fig. 4B).

In summary, a continuous waveform of the received light intensity is generated against the scan positions by the processes in Steps S11-S13 by the calculator part 4, the end positions of an object are determined by the processes in Steps S 14 and S 15 on both sides of the peak of this continuous waveform and the center position of the object is determined by the process in Step S16 from its end positions. In other words, the size and the position of an object in the direction of the scan can be determined with an accuracy better than the resolution of the detection regions. It is also possible to keep the accuracy of detection constant and to reduce the resolution of the detection regions in order to reduce the cost.

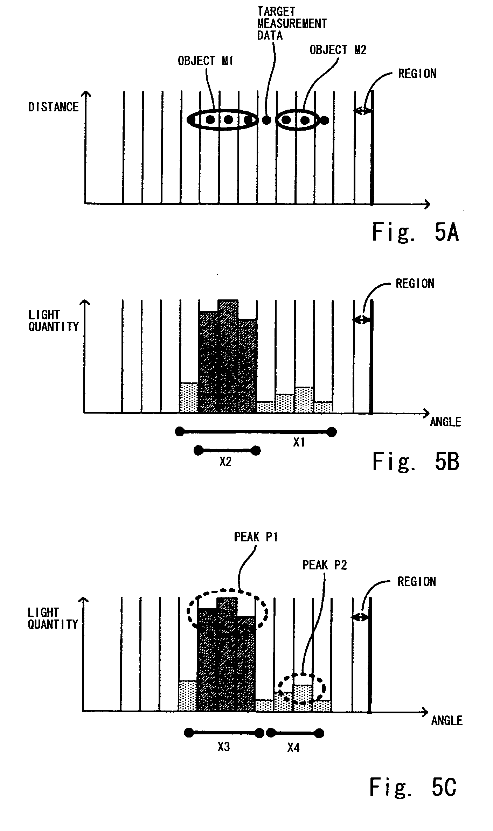

The radar device described above recognizes objects one at a time as a peak of the aforementioned continuous waveform. Thus, even in a situation where there are two objects that are close by (inclusive of a situation where the received light intensity from one of them is relatively low), it is possible to recognize them separately. Fig. 5A shows an example where there is an object M1 which is relatively large in size and has a relatively large reflectivity close to another object M2 which is relatively small and has a relatively small reflectivity. A prior art device would either recognize them as a single object as indicated by arrow X1 in Fig. 5B or only recognize the larger of the two as indicated by arrow X2 in Fig. 5B. The radar device 1 according to this invention as described above, by contrast, is very likely to be able to recognize them as separate objects as shown by arrows X3 and X4 in Fig. 5C because the continuous waveform has two peaks P1 and P2 corresponding respectively to the two objects M1 and M2.

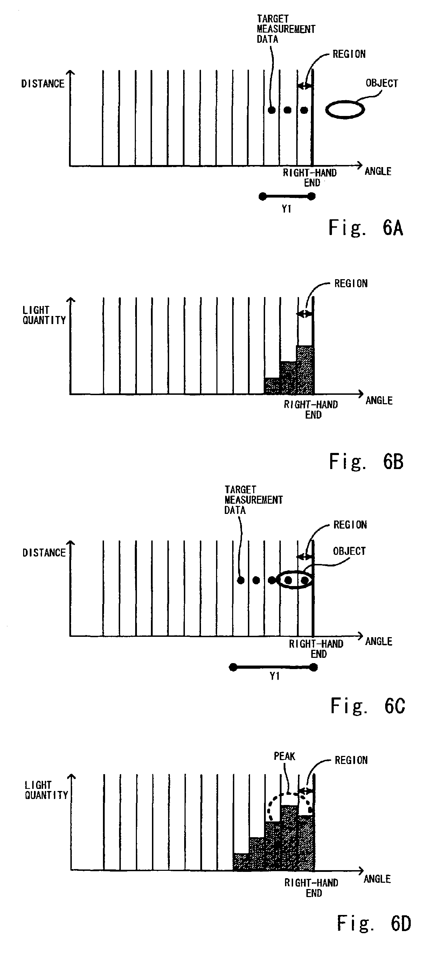

If an object is close to but outside the detection area such as shown in Fig. 6A, the aforementioned continuous waveform generated by the radar device 1 does not have a peak as shown in Fig. 6B. With measured data as shown in Fig. 6A, prior art devices are likely to recognize as an object inside the detection area, as indicated by arrow Y1. The radar device 1 according to this invention would not commit such an erroneous recognition. At least it will not recognize it as an object having both ends within the detection area because there is no continuous waveform with a peak.

If an object is at the right hand edge within the detection area as shown in Fig. 6C, however, the radar device 1 of this invention obtains a continuous waveform with a peak as shown in Fig. 6D and hence will not only correctly recognize it as an object but also recognize its both end positions. In summary, the radar device 1 according to this invention will not erroneously detect an object outside the detection area and correctly detect an object inside the detection area.

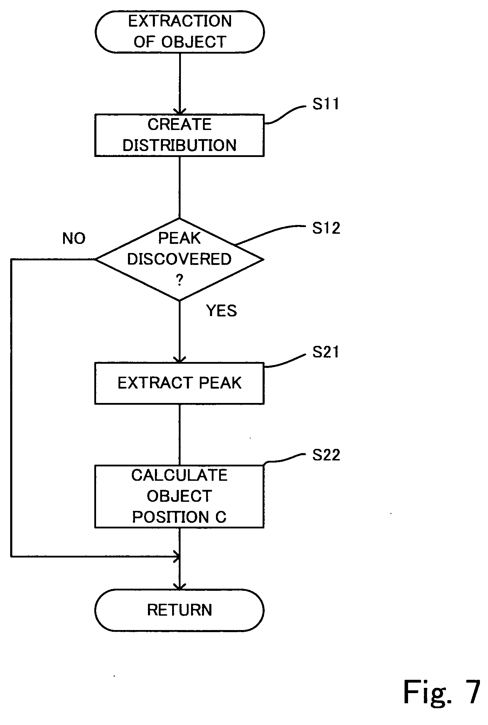

Next, the invention is described by way of its second embodiment which is different from the first embodiment in its control process for extracting an object but is the same in all other aspects. In other words, its process for extracting object or Step S4 in Fig. 2 is not as shown in Fig. 3 but is as shown in the flowchart of Fig. 7.

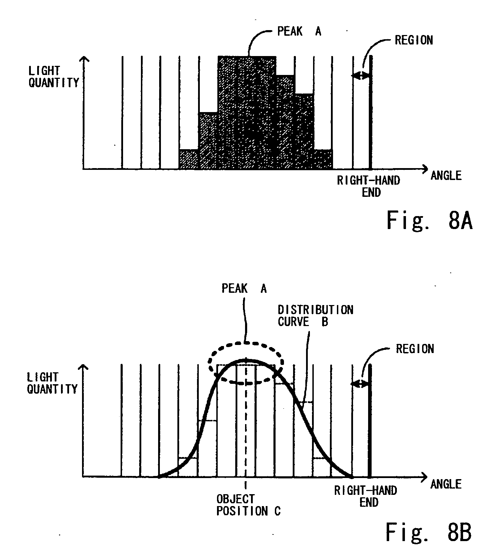

According to the second embodiment of the invention, as shown in Fig. 7, Steps S21-S22 (instead of Steps S13-S16) are carried out if it is judged in Step S12 that there is a peak (YES in Step S12). In Step S21, a continuous waveform is set and received light quantity data of the peak are extracted. If the received light quantity data are as shown in Fig. 8A, a continuous waveform may be drawn as shown in Fig. 8B as a curve (estimated distribution curve B) interpolating the data points as defined above with reference to Fig. 4B. In general, a curve passing through a plural number N of points may be expressed by a polynomial of order N-1. Thus, if N is the number of data points, a polynomial of order N-1 can be obtained by solving N-number of simultaneous equations to obtain a curve that passes through all these data points.

If it is desirable to reduce the load on the CPU for solving many simultaneous equations, a curve between a pair of mutually adjacent data points may be drawn by solving for a polynomial of a lower (than N) order. This can be done, for example, by considering M data points including the pair of data points and one or more of data points that are adjacent to the pair and solving for a polynomial of order M-1 passing through these M data points such that the interval between the given pair of mutually adjacent data points can be interpolated.

There are many other known methods of interpolation. Any of such known methods may be used for the purpose of this invention.

The extraction of a peak is carried out by differentiating this continuous waveform curve. If there is a point where the differential changes from a positive value to a negative value (a point where the differential is zero and the curve is convex in the upward direction), this point is considered to be a peak and the received light quantity at this point is considered the peak received light quantity data.

In Step S22, the center position of the object is determined based on the data on the peak extracted in Step S21. For example, the position of the peak thus determined may be the center position of the object in the direction of the scan and stored as such.

With a radar device according to the second embodiment of the invention, too, the position of an object in the direction of scan can be detected with accuracy better than the resolution of the detection regions, or the accuracy of detection can be kept the same while reducing the cost by reducing the resolution of the detection regions. Even two objects which are close to each other (inclusive of situations where one of them has a much larger reflectivity) can be detected similarly as separate objects and objects outside of the detection area are not erroneously judged to be within the detection area.

Many modifications and variations are possible within the scope of this invention. For example, Steps S14-S16 of Fig. 3 may be carried out in place of Step S22 of Fig. 7 to determine the positions of both ends and the center of the object. As another example, a filtering process for correcting faulty measured data (interpolation in discontinuities caused by failure to detect a target locally or abnormal variations in data) due, for example, to variations in detection sensitivity or noise may be carried out between Steps S11 and S12.

Additional conditions may be considered for judging an extracted peak to be a valid peak for improving the reliability of detection. For example, if a peak has an unusually large width such that the width of the object estimated from the peak exceeds a certain threshold value, it may be decided not to extract such a peak as representing an object of detection. If the received light quantity data associated with a peak are abnormally small and its ratio to the maximum received light quantity among the grouped data is less than a specified value, it may also be decided not to extract it as a valid peak.

The invention does not exclusively relate to a radar device that scans in the horizontal (left-right) direction but is equally applicable to a radar device that scans in the vertical (upward-downward) direction or in both horizontal and vertical directions. The scanning need not be carried out by a rotary motion. The light emitting part may be adapted to undergo a linear sliding motion. Scanning mechanisms disclosed, for example, in Japanese Patent Publications Tokkai 2003-121542 and 2003-177348 may be used.

The scanning mechanism may be of the type carrying out a scan only by the light emitter. In order to carry out a better measurement of distance by maintaining the condition of signal reception independent of the position of the scan, it is preferable to carry out the scan also on the side of the light receiver. For example, a mechanism for scanning the light receiver head in synchronism with the light emitter may be used.

Although an example was shown above wherein the calculator part 4 is set inside the same unit as the radar transmitting and receiving head serves as waveform setting means, peak extracting means, threshold setting means, end position judging means and center position judging means, processing means disposed in different units may be adapted to set the continuous waveform and to extract a peak and comprise each of the aforementioned means.

It also goes without saying that the present invention is applicable not only to a radar device using laser light but also to a radar device using ordinary electromagnetic waves. It is applicable not only to a radar device for a vehicle but also to radar devices used in all other fields.

## Claims

1. A radar device for transmitting electromagnetic waves while scanning a detection area in a scan direction and detecting an object in each of detection regions into which said detection area is partitioned in said scan direction, said radar device comprising:
waveform setting means for setting a continuous waveform of signal intensity of scan positions from data on the signal intensity of reflected waves individually from said detection regions;
peak extracting means for extracting a peak from said continuous waveform set by said waveform setting means;
threshold setting means for setting a threshold value based on signal intensity at said peak extracted by said peak extracting means; and
end position judging means for judging the scan positions on both sides of said peak at which the signal intensity is equal to said threshold value set by said threshold setting means as end positions of both ends of said object in said scan direction.

2. The radar device of claim 1 further comprising center position judging means for judging a center position of said object in said scan direction based on the end positions judged by said end position judging means.

3. A radar device for transmitting electromagnetic waves while scanning a detection area in a scan direction therewith and detecting an object in each of detection regions into which said detection area is partitioned in said scan direction, said radar device comprising:
waveform setting means for setting a continuous waveform of signal intensity of scan positions from data on the signal intensity of reflected waves individually from said detection regions;
peak extracting means for extracting a peak from said continuous waveform set by said waveform setting means; and
center position judging means for judging a center position of said object in said scan direction based on a top position of said peak extracted by said peak extracting means.

4. The radar device of claim 3 wherein said center position judging means judges said top position of said peak as said center position of said object.
